# EUROPEAN PATENT APPLICATION

(11) **EP 4 704 448 A1**
(43) Date of publication of application: **04.03.2026**
(21) Application number: 23934503.6
(22) Date of filing: 26.04.2023
(51) Int. Cl.: H04W 4/38

(54) **DATA PROCESSING METHOD AND APPARATUS, CORE NETWORK DEVICE AND COMPUTER READABLE STORAGE MEDIUM**

(71) Applicant: Beijing Xiaomi Mobile Software Co., Ltd., Beijing 100085 (CN)
(72) Inventor: HE, Zhibin, Beijing 100085 (CN); CHEN, Dong, Beijing 100085 (CN)
(74) Representative: Dehns Germany Partnerschaft mbB
(86) International application number: PCT/CN2023/090978
(87) International publication number: WO 2024/221301

(57) **Abstract**

Embodiments of the present disclosure disclose a data processing method and apparatus, a core network device and a computer readable storage medium, relating to the technical field of communications. The method comprises: distributing computing tasks corresponding to a perception dataset to at least one computing power node, the perception data in the perception dataset originating from a third-party application functional entity AF; receiving calculation results fed back by the at least one computing power node. An embodiment of the present disclosure, by means of collecting perception data originating from a third-party AF, distributing corresponding computing tasks to at least one computing power node for calculation, and receiving calculation results fed back by the computing power node, can improve perception data processing capability, and can satisfy high quality requirements for the perception data and computing power in a future communication system.

## Description

### TECHNICAL FIELD

The present disclosure relates to the field of communication technology, and more specifically, to a data processing method and device, core network device, and computer-readable storage medium.

### BACKGROUND

Wireless sensing technology aims to acquire information about remote objects and characteristics thereof without physical contact. Analysis of sensing data can support radio resource management, interference suppression, beam management, mobility management or the like, thereby bringing advantages in segmented markets and vertical fields, which include intelligent transportation, aviation, enterprise, smart city, smart home, factory, consumer application, public sector or the like.

In a future communication system, a communication device and terminal have a capability of sensing the physical world and mapping the same into the digital world. The deep integration of the communication system with multiple systems such as sensing and artificial intelligence has become a new technological trend.

Consequently, it has a higher requirement for the data and computing power for the entirely new services in the future communication system.

### SUMMARY

Embodiments of the present disclosure provide a data processing method and device, core network device, and computer-readable storage medium.

A first aspect of embodiments of the present disclosure provides a data processing method which is applied to a first network function, including:
distributing a computing task corresponding to a sensing dataset to at least one computing power node, wherein sensing data in the sensing dataset is from a third-party application function (AF) entity; and
receiving a computing result fed back from the at least one computing power node.

A second aspect of embodiments of the present disclosure provides a data processing method, which is applied to a second network function, including:
sending a sensing dataset to a first network function, wherein sensing data in the sensing dataset is from a third-party application function (AF) entity.

A third aspect of embodiments of the present disclosure provides a data processing method, which is applied to a third network function, including:
sending a first request message to a second network function, wherein the first request message is configured to request sensing data; and
receiving a response message sent by the second network function in response to the first request message, wherein the response message carries a sensing dataset, and sensing data in the sensing dataset is from a third-party application function (AF) entity.

A fourth aspect of embodiments of the present disclosure provides a core network device, including a first network function, a second network function, and a third network function, wherein:
the third network function is configured to send a first request message to the second network function in response to a service request message from a UE, wherein the service request message is configured to request sensing computing, and the first request message is configured to request sensing data;
the second network function is configured to send a second request message to a corresponding third-party application function (AF) entity in response to the first request message, receive the sensing data fed back by the third-party AF, form a sensing dataset, and feed the sensing dataset back to the third network function, wherein the second request message is configured to request the sensing data of each third-party AF;
the third network function is further configured to determine task deployment information based on the received sensing dataset and acquired computing power information, and send the task deployment information to the second network function;
the second network function is further configured to send the received sensing dataset and task deployment information to the first network function; and
the first network function is configured to distribute a computing task corresponding to the sensing dataset to at least one computing power node based on the received task deployment information, and receive a computing result fed back from each computing power node.

A fifth aspect of embodiments of the present disclosure provides a data processing device, which is applied to a first network function, including a first communication module configured to:
distribute a computing task corresponding to a sensing dataset to at least one computing power node, and receive a computing result fed back from the at least one computing power node, wherein sensing data in the sensing dataset is from a third-party application function (AF) entity.

A sixth aspect of embodiments of the present disclosure provides a data processing device, which is applied to a second network function, including a second communication module configured to:
send a sensing dataset to a first network function, wherein sensing data in the sensing dataset is from a third-party application function (AF) entity.

A seventh aspect of embodiments of the present disclosure provides a data processing device, which is applied to a third network function, including a third communication module configured to:
send a first request message to a second network function, and receive a response message sent by the second network function in response to the first request message,
wherein the first request message is configured to request sensing data; and
the response message carries a sensing dataset, and sensing data in the sensing dataset is from a third-party application function (AF) entity.

An eighth aspect of embodiments of the present disclosure provides a core network function, including:
a transceiver;
a processor; and
a memory storing computer-executable instructions,
wherein the processor is connected to the transceiver and the memory, and is configured to load and execute the computer-executable instructions to implement the method according to the above first or second or third aspect.

A ninth aspect of embodiments of the present disclosure provides a computer-readable storage medium, the computer-readable storage medium stores executable instructions, and the executable instructions are loaded and executed by a processor to implement the method according to the above first or second or third aspect.

The technical solutions provided by the embodiments of the present disclosure may bring the following beneficial effects:

By collecting sensing data from a third-party AF, distributing a corresponding computing task to at least one computing power node for computing, and receiving a computing result fed back from the computing power node, the processing capacity for sensing data can be enhanced. This enables the fulfilment of high-quality requirements for sensing data and computing power in the future communication system.

It should be understood that the above general description and the detailed description that follows are exemplary and explanatory only and do not limit the present disclosure.

### BRIEF DESCRIPTION OF THE DRAWINGS

The accompanying drawings herein are incorporated into and form a part of the specification, illustrate embodiments consistent with the present disclosure, and are used in conjunction with the specification to explain the principle of the present disclosure.
FIG. 1 is a schematic diagram of a network architecture according to an exemplary embodiment;
FIG. 2 is another schematic diagram of a network architecture according to an exemplary embodiment;
FIG. 3 is a flowchart of a data processing method according to an exemplary embodiment;
FIG. 4 is another flowchart of a data processing method according to an exemplary embodiment;
FIG. 5 is yet another flowchart of a data processing method according to an exemplary embodiment;
FIG. 6 is still another flowchart of a data processing method according to an exemplary embodiment;
FIG. 7 is a block diagram of a data processing device according to an exemplary embodiment;
FIG. 8 is another block diagram of a data processing device according to an exemplary embodiment;
FIG. 9 is yet another block diagram of a data processing device according to an exemplary embodiment;
FIG. 10 is a block diagram of an arrangement for implementing a data processing device 900 according to an exemplary embodiment; and
FIG. 11 is a block diagram of a core network device according to an exemplary embodiment.

### DETAILED DESCRIPTION

The following describes in detail embodiments of the present disclosure, and examples of the embodiments are illustrated in the accompanying drawings, throughout which the identical or similar reference numerals denote identical or similar elements or elements having identical or similar functions. The embodiments described below with reference to the drawings are exemplary and are intended solely to explain the present disclosure and should not be construed as limiting the scope of the present disclosure.

When the following description refers to the drawings, the same reference numerals in different drawings denote identical or similar elements unless otherwise indicated. The implementations described in the following exemplary embodiments do not represent all implementations consistent with the embodiments of the present disclosure. Rather, they are merely examples of devices and methods consistent with some aspects of the embodiments of the present disclosure as detailed in the appended claims.

Those skilled in the art will appreciate that singular forms such as 'a', 'an', 'the', and 'said' may also include plural forms unless specifically stated otherwise. It should further be understood that the term 'including/comprising' as used in the specification of the present disclosure denotes the presence of the stated features, integers, steps, operations, elements and/or components, but does not preclude the presence or addition of one or more other features, integers, steps, operations, elements, components and/or groups thereof.

It should be understood that when an element is referred to as being 'connected' or 'coupled' to another element, it may be directly connected or coupled to the other element, or there may be an intermediate element therebetween. Furthermore, the terms 'connection' or "coupling" as used herein may include wireless connection or wireless coupling. The term 'and/or' as used herein includes all or any unit and all combinations of one or more associated listed items.

In the description of the present disclosure, "a plurality of" refers to two or more, and other quantifiers have similar meanings unless otherwise indicated. 'At least one of', 'one or more' or similar expressions refer to any combination of these following items, including a single item or any combination of a plurality of items. For example, 'one or more' of a, b or c may indicate: a, b, c, a-b, a-c, b-c, or a-b-c, where a, b, and c may be singular or plural. The term 'and/or' is used to describe a relationship between associated objects, indicating that there may be three types of relationships. For example, 'A and/or B' may represent A alone, both A and B, or B alone. Here, A and B may be singular or plural.

Although operations are described in a specific order in the embodiments and drawings of the present disclosure, this should not be interpreted as requiring that these operations be performed in the specific order shown or in a serial order, or that all the operations shown must be performed to achieve a desired result. In specific environments, multitasking and parallel processing may be advantageous. Furthermore, sending a plurality of pieces of information via a single message may also be beneficial.

Firstly, an implementation environment of the embodiments of the present disclosure will be described below.

The technical solutions of the embodiments of the present disclosure may be applied to various communication systems. Such communication system may include one or more of the 4^{th} generation (4G) communication system, the 5^{th} generation (5G) communication system, or other future radio communication systems (e.g., 6G). The communication system may also include one or more of a Public Land Mobile Network (PLMN) network, a non-terrestrial network communication system, a Device-to-Device (D2D) communication system, a Machine-to-Machine (M2M) communication system, an Internet of Things (IoT) communication system, a Vehicle-to-Everything (V2X) communication system, or other communication systems.

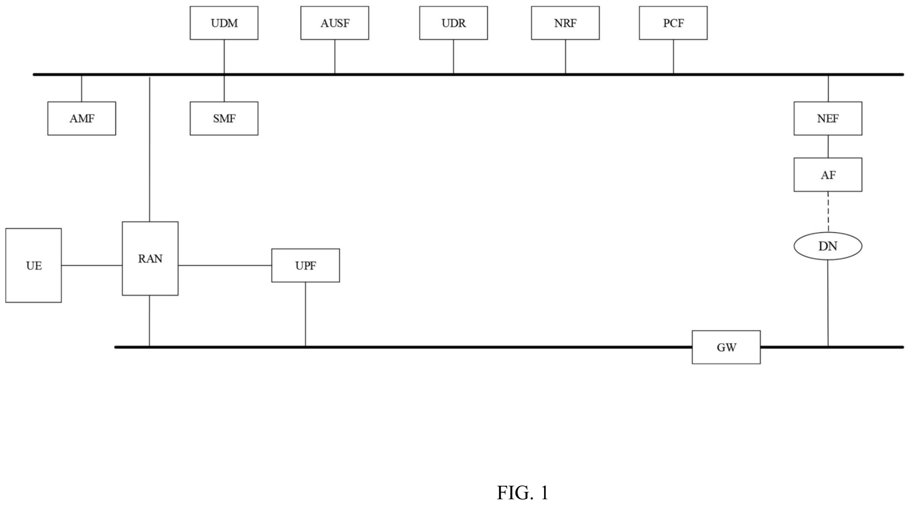

FIG. 1 illustrates a schematic diagram of a network architecture in the related art, and the network architecture may specifically include the following network functions.

### 1) User Equipment (UE)

The user equipment (UE) includes devices providing voice and/or data connectivity to users. Specifically, the UE may include devices providing voice to users, devices providing data connectivity to users, or devices providing both voice and data connectivity to users. Examples may include handheld devices with wireless connection function, or processing devices connected to radio modems. In an embodiment, the User Equipment (UE) may be a mobile station (MS), mobile terminal (MT), or the like.

Specifically, the user equipment (UE) may be a mobile phone, tablet computer, or computer with wireless transceiver capabilities. It may also be a virtual reality (VR) terminal, augmented reality (AR) terminal, wireless terminal in industrial control, wireless terminal in autonomous driving, wireless terminal in telemedicine, wireless terminal in smart grids, wireless terminal in smart cities, smart home, in-vehicle terminal or the like.

### 2) Access Network (AN)

The access network provides network access functionality for authorized users within a specific area, and may employ transmission tunnels with different qualities based on user levels, service requirements or the like. It may be access networks utilizing different access technologies. Currently, there are two types of radio access technologies: 3^{rd} Generation Partnership Project (3GPP) access technologies (e.g., those employed in 3G, 4G, or 5G systems) and non-3GPP access technologies.

The 3GPP access technologies refer to those compliant with 3GPP standard specifications. The access networks employing 3GPP access technologies are referred to as Radio Access Networks (RAN). The access network device in 5G systems is referred to as the next-generation Node Base station (gNB). The non-3GPP access technologies refer to those not compliant with 3GPP standards, such as radio technologies represented by access point (AP) in Wi-Fi.

The access network implementing access network function based on radio communication technology may be referred to as a radio access network (RAN). The radio access network manages radio resources, provides access services to user equipment, and facilitates the forwarding of control signals and user data between user equipment and the core network.

### 3) Access and Mobility Management Function (AMF) Entity

The AMF entity is primarily used for mobility management, access management or the like, and may implement all other functions of the Mobility Management Entity (MME) functions than session management, such as lawful interception or access authorization.

### 4) Session Management Function (SMF) entity

The SMF entity is primarily used for session management, Internet Protocol (IP) address allocation and management for the UE, selection of manageable user plane functions, policy control, termination points for charging function interfaces, and downlink data notification.

### 5) User Plane Function (UPF) entity

The UPF is also referred to as data plane gateway, and may be used for packet routing and forwarding, or Quality of Service (QoS) processing for user plane data. User data may access the Data Network (DN) via this network function.

### 6) Policy Control Function (PCF) entity

The PCF entity is primarily used for implementing user control policy management, including QoS control and service access control.

### 7) Unified Data Management (UDM) Entity

The UDM entity is primarily used for implementing subscription data management of user and roaming control.

### 8) Authentication Server Function (AUSF) Entity

The AUSF entity is primarily used for implementing user authentication function.

### 9) Unified Data Repository (UDR) Entity

The UDR entity is primarily used for storing subscription data and policy data for both UDM and PCF.

### 10) Network Exposure Function (NEF) entity

The NEF entity is primarily used for capability exposure, that is, exporting 5G network capabilities to external networks, for example, transmitting terminal location information externally. Simultaneously, the NEF may receive external information to update and manage some network information.

### 11) Network Repository Function (NRF) Entity

The NRF entity is primarily used for managing all NFs supporting service-oriented interfaces within the 5G network. These NFs should first register with the NRF. When NFs search for each other, they query the NRF to identify each other. This function is similar to the DNS in the 4G network, though the function of the NRF is significantly more complex. Failure of the NRF would have substantial impact on the network.

### 12) Application Function (AF) Entity

The AF entity generally refers to various applications (APP) capable of interacting directly or indirectly with the 5G network. Indirect interaction refers to that the AF interacts with other 5G NFs via the NEF.

It should be understood that the AMF, SMF, UPF, and other entities shown in FIG. 1 may be interpreted as network functions implementing different functions in the core network, for example, they can form network slices according to requirements. These core network functions may reside in independent devices or be integrated within a single device to perform different functions, which is not limited in the present disclosure.

It should further be understood that the aforementioned name is only for distinguishing different functions and does not imply that these network functions constitute separate physical devices. The specific form of the aforementioned network functions is not limited in the present disclosure, for example, they may be integrated within a single physical device or reside in distinct physical devices. Moreover, the aforementioned name is only for distinguishing different functions and does not intend to limit the present disclosure. The present disclosure does not preclude the adoption of other names within 5G networks or future networks. For instance, within 6G networks, some or all of the aforementioned network functions may retain the names in 5G or adopt other names. This clarification is provided herein, which is not repeated in the following.

Future communication systems such as the 6^{th} generation mobile communication system (6G) have become a global research focus. New vertical application scenarios such as smart cities, smart transportation, smart manufacturing, and smart homes will emerge in the 6G era. These require that communication devices and terminals have the capability of sensing the physical world and mapping the same into the digital world. The deep integration of the communication system with multiple systems such as sensing and artificial intelligence has become a new technological trend.

The communication and the sensing were developed independently and in parallel. Consequently, the 6G communication and sensing fusion need to consider the difference and the common point between the communication and the sensing, so as to create streamlined, efficient, and easily deployable 6G communication and sensing fusion devices and networking models. The 6G network may provide users with more personalized service experiences, in which the network states and the provided resources are matched with user demands. Through cooperating and sharing of software and hardware resources, each network function device in the network may achieve deep integration and mutual enhancement communication of multidimensional sensing, collaborative communication, and intelligent computing. This enables the network to have novel intelligent interaction and processing of information flows and wide-area intelligent collaboration.

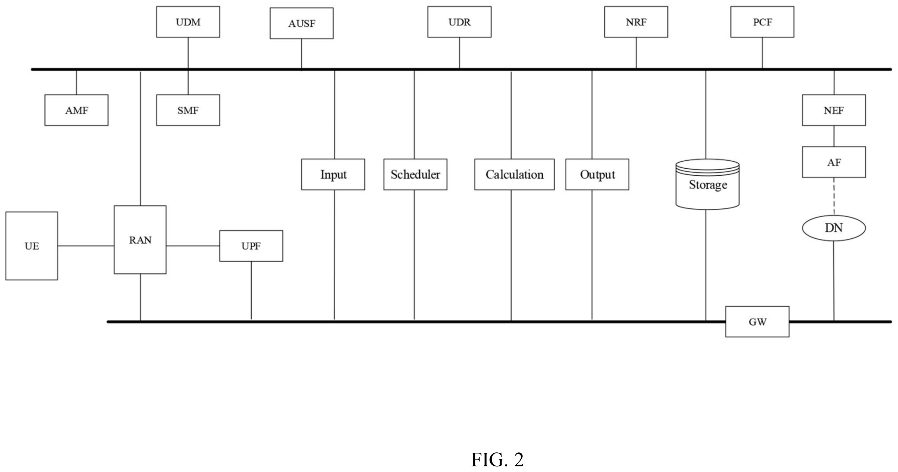

To collect and compute sensing data of a third-party AF, thereby better meeting emerging services in 5G networks and other future networks and their high-quality requirements for data and computing power, an embodiment of the present disclosure proposes a network architecture illustrated in FIG. 2.

FIG. 2 illustrates a schematic diagram of a network architecture applicable to the method provided by embodiments of the present disclosure. This architecture includes the following additional network functions on the basis of the network architecture shown in figure:
1) scheduler network function mainly used for task scheduling related to service data according to service requirements;
2) input network function mainly used for inputting service data;
3) calculation (computing) network function mainly used for controlling the computation of service data, such as task distribution, and collection, aggregation, and analysis of computing results;
4) output network function mainly for outputting the service data; and
5) storage network function mainly used for storing service data and/or related information.

For example, in the solutions of the embodiments of the present disclosure, the storage network function is configured to store information of a computing power node providing computing power support to a core network. That is, the computing power node capable of providing the computing power support to the core network has completed computing power registration in the storage network function of the core network to indicate that it can execute a computing power task (computing power computing task or computing task) allocated by the core network.

The computing power information may include information of computing performance of a corresponding device, for example, a data size transmitted per second, an AI model employed for data computing, and whether it can compute only data of a specific type. It should be understood that other information regarding the computing performance is not excluded.

The computing power node may include one or more of a UE-side, core network-side, or third-party computing power node.

It should be understood that the aforementioned network architecture is merely an illustrative description from the perspective of traditional point-to-point architecture and service-oriented architecture. The network architecture applicable to the embodiments of the present disclosure is not limited thereto; and any network architecture capable of realizing the functions of the aforementioned network functions can be applicable to the embodiments of the present disclosure.

It should be understood that the scheduler, input, calculation, output, and storage network functions shown in FIG. 2 may be interpreted as network functions implementing distinct functions in the core network, for example, they can form network slices according to requirements. These core network functions may reside in independent devices or be integrated within a single device to perform different functions, which is not limited in the present disclosure.

It should further be understood that the aforementioned name of the network function is only for distinguishing different functions and does not imply that these network functions constitute separate physical devices. The specific form of the aforementioned network functions is not limited in the present disclosure, for example, they may be integrated within a single physical device or reside in distinct physical devices. Moreover, the aforementioned name is only for distinguishing different functions and does not intend to limit the present disclosure. The present disclosure does not preclude the adoption of other names within future other networks. For instance, within 6G networks, the aforementioned network functions may adopt other names. This clarification is provided herein, which is not repeated in the following.

It should be noted that within the network architecture shown in FIG. 2, only some network functions may participate in the data processing method of the embodiments of the present disclosure.

Some application scenarios for the data processing method of the embodiments of the present disclosure are described below. The data processing method of the embodiments of the present disclosure may be applied to for example some of the following scenarios.

Real-time Environment Monitoring: an environment map is reconstructed by processing precepted radio signals, which can further enhance positioning accuracy, thereby enabling environment-related applications such as dynamic 3D map-assisted driving, pedestrian flow statistics, pedestrian intrusion detection, and other real-time monitoring applications including traffic flow detection.

Autonomous Vehicles/Drones: applications for autonomous vehicles/drones have some common functional requirements. For example, the autonomous vehicles/drones support Detect and Avoid (DAA) to circumvent obstacles. Simultaneously, the autonomous vehicles/drones have a path monitoring capability, such as route selection and traffic regulation adherence. Thus, processing sensed data may facilitate both obstacle circumventing and path monitoring.

Air Pollution Monitoring: the quality of received radio signals exhibits varying attenuation characteristics due to varying air humidity, particulate matter (PM) concentration, carrier frequency, etc. Consequently, processing sensed data may facilitate weather or air quality detection.

Indoor Health Monitoring and Intrusion Detection: processing sensed data enables respiratory rate estimation, respiratory depth estimation, apnoea detection, vital signs monitoring for the elderly, and indoor intrusion detection.

It should be noted that the type of sensing data acquired by the third-party application function (AF) entity may vary according to different scenario requirements.

For example, the sensing data may include location and channel environment of the third-party application function (AF) entity, which may aid in narrowing the beam scanning range and reducing beam training time.

For another example, the sensing data may include location, velocity, motion trajectory, and channel environment of the third-party application function (AF) entity for beam prediction, which can decrease beam measurement overhead and beam tracking latency.

For yet another example, the sensing data may include attributes (for example, orientation, size and shape) and channel environment of the third-party application function (AF) entity, thereby enhancing channel estimation performance.

In addition to the above examples, the sensing data may also include trajectory information of the third-party application function (AF) entity. Further, the location of the third-party application function (AF) entity includes longitude and latitude information.

It should be noted that the sensing data may be represented in various formats such as text, image, video, and audio.

It should further be noted that the sensing data may be data sensed by the third-party application function (AF) entity, or data received by the third-party application function (AF) entity from the external environment.

Based on the aforementioned network architecture, various method embodiments of the present disclosure are proposed to achieve collection and computation of third-party AF sensing data.

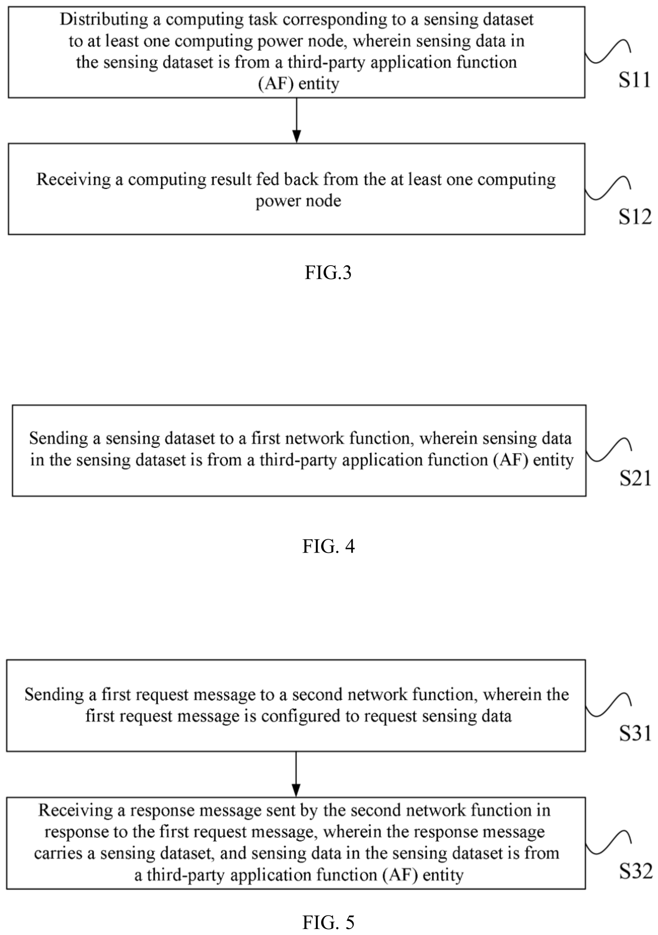

FIG. 3 illustrates a flowchart of a data processing method according to an exemplary embodiment. As shown in FIG. 3, the data processing method is applied to a first network function in a core network device, and includes:
S11, distributing a computing task corresponding to a sensing dataset to at least one computing power node, wherein sensing data in the sensing dataset is from a third-party application function (AF) entity; and
S12, receiving a computing result fed back from the at least one computing power node.

In the above solution, by collecting the sensing data from the third-party AF, distributing the corresponding computing task to at least one computing power node for computing, and receiving the computing result fed back from the computing power node, the processing capacity for sensing data can be enhanced. This enables the fulfilment of high-quality requirements for sensing data and computing power in the future communication system.

In some embodiments, the method further includes:
S13a (not shown in figures), sending the computing result to a network function for outputting the computing result; and/or
S13b (not shown in figures), sending, via a user plane network function, the computing result to a user equipment (UE), wherein the UE is a UE with a sensing computing requirement.

In the embodiment, after collecting the sensing data from the third-party AF, distributing the corresponding computing task to at least one computing power node for computing, and receiving the computing result fed back from the computing power node, the computing result may be sent to the network function for outputting the computing result to be output, and/or may be sent via the user plane network function to the UE requesting the sensing service computing. This provides a foundation for subsequent data utilization.

For example, in this embodiment, the form in which the network function for outputting the computing result outputs the result may include audio, screen display, specific operation of IoT device, etc., without excluding other output forms, which is not limited in the embodiment.

In some embodiments, the method further includes, prior to sending the computing result:
analyzing and aggregating the computing result.

In the embodiment, after collecting the sensing data from the third-party AF, distributing the corresponding computing task to at least one computing power node for computing, and receiving the computing result fed back from the computing power node, the computing result may be analyzed and aggregated, and then may be sent to the network function for outputting the computing result to be output, and/or may be sent via the user plane network function to the UE requesting the sensing service computing. This provides a foundation for subsequent data utilization.

For example, in the embodiment, the computing result from each computing power node may be categorized and aggregated according to a service type (e.g., voice, image, text, etc.), a service requirement (e.g., voice recognition, text keyword extraction, image rendering, etc.), or size (e.g., within 500MB, exceeding 500MB, etc.).

In some embodiments, the step S11 may specifically include: distributing, based on task deployment information for sensing computing, the computing task corresponding to the sensing dataset to the at least one computing power node.

In the embodiment, the computing task corresponding to the sensing data collected from the third-party AF may be distributed to at least one computing power node according to the task deployment information for sensing computing. This enables more rational utilization of computing resources, effectively enhancing data processing capabilities.

In some embodiments, the method further includes:
S14 (not shown in figures), receiving the task deployment information sent by a second network function, wherein the task deployment information includes the sensing data in the sensing dataset and information of a corresponding computing power node.

In the embodiment, as the task deployment information from the second network function includes the sensing data in the sensing dataset and the information of the corresponding computing power node, the computing task corresponding to the sensing data collected from the third-party AF may be distributed to at least one computing power node according to the task deployment information for sensing computing. This enables more rational utilization of computing resources, effectively enhancing data processing capabilities.

In some embodiments, the method further includes: receiving the sensing dataset sent by a second network function.

In the embodiment, the sensing data from the third-party AF may be collected by receiving the sensing dataset sent by the second network function.

For example, the sensing data in the sensing dataset may be an aggregating and analyzing result of the sensing data formed by the second network function processing, for example, categorizing and aggregating the sensing data based on its size, type, etc.

In the above embodiment, the computing power node may include: at least one of a UE, a core network device, or a third-party computing power node; and/or at least one of the at least one of a UE, a core network device, and a third-party computing power node.

For example, if the computing power node is singular, it may be any one of the UE side, core network side, or third-party computing power node. If two computing power nodes are employed, they may include any two of the UE side, core network side, or third-party computing power node; or they may be two UEs, two core network devices or network functions, or two third-party computing power nodes. If a plurality of computing power nodes are employed, they may be a plurality of UEs, a plurality of core network devices or network functions, or a plurality of third-party computing power nodes; or they may be a combination of UEs, core network devices or network functions, and third-party computing power nodes. The embodiments of the present disclosure are not limited thereto.

It should be noted that the first network function in an embodiment of the present disclosure may include, but is not limited to, the calculation network function within the core network architecture as illustrated in FIG. 2, or network functions with computing functions within other future core network architectures.

FIG. 4 is another flowchart of a data processing method according to an exemplary embodiment. As shown in FIG. 4, the data processing method is applied to a second network function in a core network device, and includes:
S21, sending a sensing dataset to a first network function, wherein sensing data in the sensing dataset is from a third-party application function (AF) entity.

In the embodiment, the second network function sends the sensing data from the third-party application function (AF) entity to the first network function, thereby providing a data foundation for subsequent sensing computing.

In some implementations, the sensing data in the sensing dataset may be processed by the second network function. For example, the second network function may categorize and aggregate the sensing data based on data size and data type of the sensing data, thereby forming an aggregated and analyzed result of the sensing data, and then send the same to the first network function.

In some embodiments, the method further includes:
S22 (not shown in the figures), receiving a first request message sent by a third network function, wherein the first request message is configured to request the sensing data; and
S23 (not shown in the figures), acquiring the sensing dataset in response to the first request message.

In the embodiment, the second network function acquires the sensing dataset in response to the first request message sent by the third network function for requesting the sensing data, and sends the sensing dataset to the first network function, thereby providing a data foundation for subsequent sensing computing.

For example, the first request message may include information related to the third-party AF, such as identifier, location, sensing area, sensing data reporting cycle of the third-party AF.

In some embodiments, the step S23 may specifically include:
sending a second request message to at least one corresponding third-party application function (AF) entity in response to the first request message, wherein the second request message is configured to request the sensing data of each third-party AF; and
acquiring the sensing dataset by receiving the sensing data sent by the at least one third-party AF.

In this embodiment, the second network function may send the second request message for requesting the sensing data of the third-party AF to at least one corresponding third-party application function (AF) entity in response to the first request message sent by the third network function for requesting the sensing data, and receive the sensing data sent by each third-party AF.

In the above solution, the sensing data sent by the at least one third-party AF via a user plane network function may be received.

For example, the second request message may include information related to the third-party AF, such as identifier, location, sensing area, sensing data reporting cycle of the third-party AF. It may also include other information related to the sensing data, such as time period during which the sensing data is collected, collection location, etc.

In some embodiments, the method further includes:
S24 (not shown in the figures), sending a response message to the third network function in response to the first request message, wherein the response message carries the sensing dataset; and
S25 (not shown in the figures), receiving task deployment information for sensing computing sent by the third network function, wherein the task deployment information is obtained based on the sensing dataset.

In the embodiment, the second network function may feedback the collected sensing data of the third-party AF to the third network function, and receive the task deployment information for sensing computing sent by the third network function. The task deployment information is obtained based on the collected sensing data of the third-party AF.

In some embodiments, the method further includes:
S26 (not shown in the figures), sending the task deployment information to the first network function, wherein the task deployment information includes the sensing data in the sensing dataset and information of a corresponding computing power node.

In the embodiment, the second network function may send the task deployment information from the third network function to the first network function. As the task deployment information includes the sensing data in the sensing dataset and the information of the corresponding computing power node, the first network function can distribute a computing task corresponding to the collected sensing data from the third-party AF to a corresponding computing power node according to the task deployment information for sensing computing. This enables more rational utilization of computing resources and effectively enhances data processing capabilities.

It should be noted that the third network function in an embodiment of the present disclosure may include, but is not limited to, the scheduler network function within the core network architecture as illustrated in FIG. 2, or network functions with task-scheduling functions within other future core network architectures.

FIG. 5 is yet another flowchart of a data processing method according to an exemplary embodiment. As shown in FIG. 5, the data processing method is applied to a third network function within the core network device and includes:
S31, sending a first request message to a second network function, wherein the first request message is configured to request sensing data; and
S32, receiving a response message sent by the second network function in response to the first request message, wherein the response message carries a sensing dataset, and sensing data in the sensing dataset is from a third-party application function (AF) entity.

In the embodiment, the third network function may send the first request message to the second network function to request the sensing data, and receive the response message sent by the second network function in response to the first request message. The response message carries the sensing data from the third-party application function (AF) entity, therefore the third network device acquires the sensing data from the third-party AF, which provides a foundation for subsequent allocating and scheduling of computing power resources.

In some embodiments, the method further includes:
S33 (not shown in the figures), determining task deployment information for sensing computing based on computing power information and the sensing dataset, wherein the computing power information includes information of a computing power node providing computing power support to a core network; and
S34 (not shown in the figures), sending the task deployment information to the second network function.

In the embodiment, the third network function may determine which sensing data is to be computed by which computing power node(s) based on the sensing data and computing power information, thereby forming the task deployment information and sending the same to the second network function.

In some embodiments, the method further includes:
S35 (not shown in the figures), acquiring the computing power information from a storage network function, wherein the storage network function is configured to store the information of the computing power node providing the computing power support to the core network.

In the embodiment, the storage network function stores the information of the computing power node providing the computing power support to the core network. The third network function may directly retrieve all currently stored computing information from the storage network function to prepare for subsequently determining the computing power resource allocation for sensing computing.

In some embodiments, the method further includes:
S36 (not shown in the figures), receiving a service request message from a UE, wherein the service request message is configured to request sensing computing; and
S37 (not shown in the figures), sending the first request message to the second network function in response to the service request message.

In the embodiment, the third network function, in response to the service request message from the UE requesting sensing computing, sends the first request message to the second network function to request the sensing data for the sensing computing.

In the foregoing embodiment, the service request message includes at least one of a UE identifier, a service type, or a service requirement.

For example, the UE identifier may be a Subscriber Permanent Identifier (SUPI); the service type may include voice, text, image, video, etc.; and the service requirement may include voice recognition, text keyword extraction, image rendering, etc.

It should be understood that the embodiments of the present disclosure do not preclude other service types, service requirements, and UE identifiers.

In the above embodiment, the task deployment information includes the sensing data in the sensing dataset and a corresponding computing power node.

For example, if the sensing dataset includes text data, image data, and voice data, in which the text data includes text data 1, the image data includes image data 1 (within 500MB) and image data 2 (over 500MB), and the voice data includes voice data 1 (Chinese voice data), voice data 2 (English voice data) and voice data 3 (voice data in another language), and the information of computing power node may include one or more of location, type, quantity, identifier, or name of the computing power node, the task deployment information may be as shown in the following table:

| Sensing data | Location of computing power node | Type of computing power node | Quantity of computing power node | Name of computing power node |
|---|---|---|---|---|
| Text data 1 | Longitude: A1; | UE | 1 | |
| | Latitude: B1 | | | |
| Image data 1 | | Third-party computing power node | 1 | Third-party computing power node 1 |
| Image data 2 | | Third-party computing power node | 1 | Third-party computing power node 2 |
| | | Core network | | |
| Voice data 1 | | UE | 50 | UE1, UE2, ..., UE50 |
| | | Third-party computing power node | 10 | Third-party computing power nodes 1 ...10 |
| | | Core network | | |
| Voice data 2 | | UE | 20 | UE1, UE2, ..., UE20 |
| | Longitude: A3 | Third-party computing power node | 2 | |
| | Latitude: B4 | Third-party computing power node | 5 | |
| Voice data 3 | Longitude: A5 | UE | 30 | |
| | | Third-party computing power node | 1 | Third-party computing power node 3 |

It should be noted that the contents listed in the above table are provided merely as examples to illustrate the task deployment information in the embodiments of the present disclosure. They do not constitute any limitation on the embodiments of the present disclosure, nor do they exclude the possibility that the task deployment information may also include other information related to sensing computing, as well as other representations.

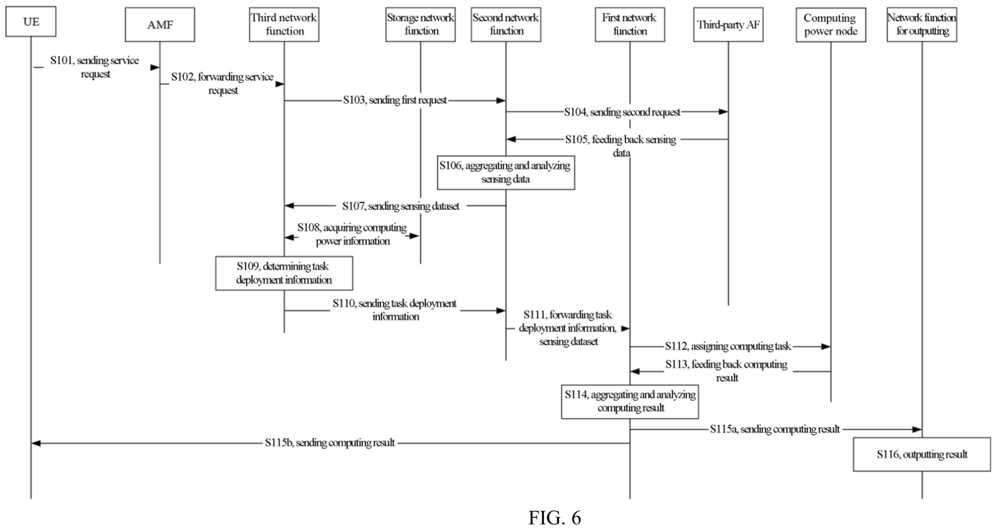

FIG. 6 is still another flowchart of a data processing method according to an exemplary embodiment. As shown in FIG. 6, the data processing method is applied to a core network device which may include a first network function, a second network function, a third network function, a storage network function and a network function for outputting a computing result. The method includes the following steps.

In S101, a UE sends a service request message to an AMF, wherein the service request message requests sensing computing.

In an embodiment, the service request message may also be referred to as a sensing computing service request message. This service request message may include a Subscriber Permanent Identifier (SUPI), service type, service requirement, etc.

The service type may include voice, text, image, video, etc.; and the service requirement may include voice recognition, text keyword extraction, image rendering, etc.

It should be understood that the embodiments of the present disclosure do not exclude other service types and service requirements.

In S102, the AMF forwards the received service request message to the third network function (which may correspond to the Scheduler network function in the network architecture shown in FIG. 2), enabling the third network function to establish a service with the UE.

In S103, in response to the received service request message, the third network function sends a first request message to the second network function (which may correspond to the Input network function in the network architecture shown in FIG. 2). The first request message is used to request sensing data.

In an embodiment, the first request message may be referred to as a third-party AF sensing data input request message. Specifically, the third network function may determine a corresponding third-party AF based on the service requirement within the service request message and send the first request message to the second network function to request input of the third-party AF sensing data.

For example, if the service requirement is voice recognition, the voice data is needed, then the third network function may send a request to the second network function to request input of the third-party AF sensing voice data.

In S104, in response to receiving the first request message, the second network function sends a second request message to one or more corresponding third-party AF entities. The second request message is used to request sensing data of each third-party AF.

Specifically, the second network function may send the second request message to one or more third-party AF entities via the Network Exposure Function (NEF) entity. The second request message may be referred to as a sensing data input request message.

In S105, the third-party AF entity uploads the sensing data to the second network function.

Specifically, the sensing data may be uploaded to the second network function via a user plane network function.

In S106, the second network function aggregates and analyzes the received sensing data.

Specifically, the second network function may categorize and aggregate the sensing data based on data size and data type of the sensing data, to form an aggregated and analyzed result of the sensing data.

In S107, the second network function sends the aggregated and analyzed result of the sensing data to the third network function.

In S108, the third network function retrieves computing power information from the storage network function (corresponding to the Storage network function in the network architecture shown in FIG. 2). The computing power information includes information of the computing power node providing computing power support to the core network.

Specifically, in an embodiment, the computing power information may also be referred to as computing power registration information. The third network function may directly retrieve all computing power information currently stored within the storage network function.

For example, the computing power information may include information of computing performance of a corresponding device, for example, a data size transmitted per second, an AI model employed for data computing, and whether it can compute only data of a specific type. It should be understood that other information regarding the computing performance is not excluded.

In S109, the third network function deploys tasks based on the acquired computing power information and the aggregated and analyzed results of the sensing data, thereby obtaining task deployment information.

Specifically, based on the aggregated and analyzed results of the sensing data and the computing power information, the third network function can determine which sensing data is to be computed by which computing power node(s), thereby forming the task deployment information.

In S110, the third network function sends the task deployment information to the second network function.

In S111, the second network function sends the sensing data and the task deployment information to the first network function (which may correspond to the Calculation (computing) network function in the network architecture illustrated in FIG. 2).

In S112, the first network function distributes the computing task to the corresponding computing power node based on the task deployment information.

In an embodiment, there may be one or more computing power nodes including UE-side, core network-side, or third-party computing power nodes. For example, if the computing power node is singular, it may be any one of the UE side, core network side, or third-party computing power node. If two computing power nodes are employed, they may include any two of the UE side, core network side, or third-party computing power node; or they may be two UEs, two core network devices or network functions, or two third-party computing power nodes. If a plurality of computing power nodes are employed, they may be a plurality of UEs, a plurality of core network devices or network functions, or a plurality of third-party computing power nodes; or they may be a combination of UEs, core network devices or network functions, and third-party computing power nodes. The embodiment is not limited thereto.

In S113, each computing power node feedbacks its computing result to the first network function.

In S114, the first network function aggregates and analyzes all computing results fed back by the computing power nodes.

Following aggregation and analysis of the computing results from each computing power node, the first network function may execute step S115a to output the computing result and/or execute step S115b to feed back the computing result to the UE requesting the sensing computing.

In S115a, the first network function sends the computing result to the network function for outputting the computing result (which may correspond to the Output network function in the network architecture illustrated in FIG. 2).

In S116, the network function for outputting the computing result outputs the result.

In an embodiment, the output form of the result may include audio, screen display, or specific operation of IoT device.

In S15b, the first network function sends the computing result to the UE via a user plane network function.

In the solution of the above embodiment, by collecting the sensing data from the third-party AF, and performing computation and analysis by fully utilizing computing power resources from the UE side, core network, and third-party, the new services in the 5G network and the other future networks and their high-quality requirements for the data and computing power may be supported and fulfilled.

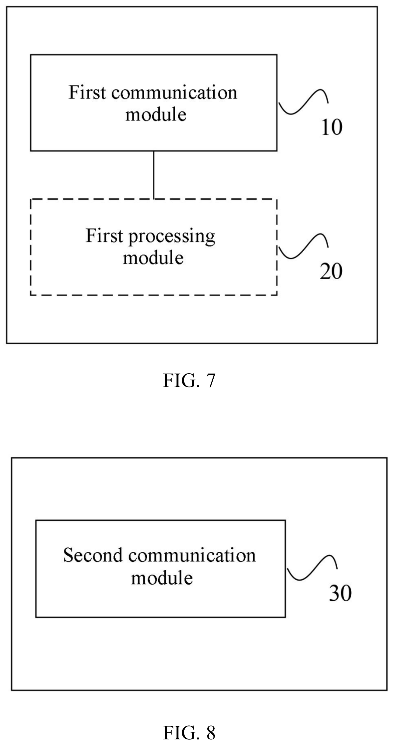

FIG. 7 is a block diagram of a data processing device according to an exemplary embodiment. The data processing device is applied to a first network function. Referring to FIG. 7, the device includes a first communication module 10.

The first communication module 10 is configured to distribute a computing task corresponding to a sensing dataset to at least one computing power node and receive a computing result fed back from the at least one computing power node. Sensing data in the sensing dataset is from a third-party application function (AF) entity

In some embodiments, the first communication module 10 is further configured to: send the computing result to a network function for outputting the computing result; and/or send, via a user plane network function, the computing result to a user equipment (UE), wherein the UE is a UE with a sensing computing requirement.

In some embodiments, the device further includes a first processing module 20.

The first processing module 20 is configured to analyze and aggregate the computing result.

In some embodiments, the first communication module 10 is configured to: distribute, based on task deployment information for sensing computing, the computing task corresponding to the sensing dataset to the at least one computing power node.

In some embodiments, the first communication module 10 is further configured to receive the task deployment information sent by a second network function, and the task deployment information includes the sensing data in the sensing dataset and information of a corresponding computing power node.

In some embodiments, the first communication module 10 is further configured to receive the sensing dataset sent by a second network function.

In some embodiments, the computing power node includes: at least one of a UE, a core network device, or a third-party computing power node; and/or at least one of at least one of a UE, a core network device, and a third-party computing power node.

Regarding the device in the aforementioned embodiments, the specific manner in which each unit performs operations has been detailed in the embodiments concerning the method, which is not repeated herein.

In practical applications, the specific structures of the aforementioned first communication module 10 and first processing module 20 may be implemented by central processing unit (CPU), microcontroller unit (MCU), digital signal processor (DSP), or programmable logic controller (PLC) within the data processing device or a terminal to which the data processing device belongs.

The data processing device described in the embodiment may be arranged within a core network device.

Those skilled in the art may appreciate that the function of each unit within the data processing device of the embodiment of the present disclosure may be understood by reference to the preceding description of the data processing method applied to the first network function. The function of each unit within the data processing device of the embodiment of the present disclosure may be realized either through analogue circuit implementing the functions described in the embodiment of the present disclosure, or through a terminal device running software executing the functions described in the embodiment of the present disclosure.

By collecting the sensing data from the third-party AF, and performing computation and analysis by fully utilizing computing power resources from the UE side, core network, and third-party, the data processing device described in the embodiment of the present disclosure may support and fulfil new services in the 5G network and the other future networks and their high-quality requirements for the data and computing power.

FIG. 8 illustrates another block diagram of a data processing device according to an exemplary embodiment. The device is applied to a second network function. Referring to FIG. 8, the device includes a second communication module 30.

The second communication module 30 is configured to send a sensing dataset to a first network function, wherein sensing data in the sensing dataset is from a third-party application function (AF) entity.

In some embodiments, the second communication module 30 is configured to: send a second request message to at least one corresponding third-party application function (AF) entity in response to the first request message, wherein the second request message is configured to request the sensing data of each third-party AF; and acquire the sensing dataset by receiving the sensing data sent by the at least one third-party AF.

In the above solution, the second communication module 30 is configured to receive the sensing data sent by the at least one third-party AF via a user plane network function.

In some embodiments, the second communication module 30 is further configured to:

send a response message to the third network function in response to the first request message, wherein the response message carries the sensing dataset; and

receive task deployment information for sensing computing sent by the third network function, wherein the task deployment information is obtained based on the sensing dataset.

In some embodiments, the second communication module 30 is further configured to send the task deployment information to the first network function, wherein the task deployment information includes the sensing data in the sensing dataset and information of a corresponding computing power node.

Regarding the device in the aforementioned embodiments, the specific manner in which each unit performs operations has been detailed in the embodiments concerning the method, which is not repeated herein.

In practical applications, the specific structure of the aforementioned second communication module 30 may be implemented by the data processing device or camera, sensor or the like to which the data processing device belongs.

The data processing device described in the embodiment may be arranged within a core network device.

Those skilled in the art may appreciate that the function of each unit within the data processing device of the embodiment of the present disclosure may be understood by reference to the preceding description of the data processing method applied to the second network function. The function of each unit within the data processing device of the embodiment of the present disclosure may be realized either through analogue circuit implementing the functions described in the embodiment of the present disclosure, or through a base station running software executing the functions described in the embodiment of the present disclosure.

By collecting the sensing data from the third-party AF, distributing the corresponding computing task to at least one computing power node for computing, and receiving the computing result fed back from the computing power node, the data processing device described in the embodiment of the present disclosure can enhance the processing capability of sensing data and meet the high-quality requirements for sensing data and computing power in future communication systems.

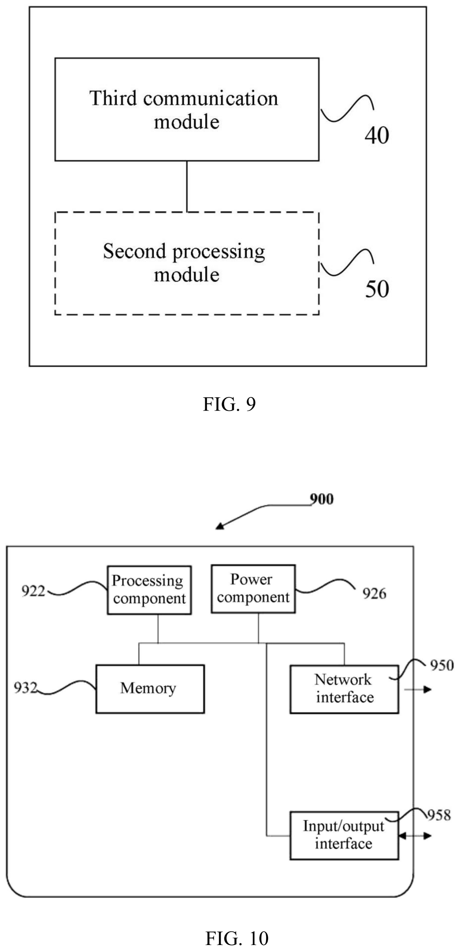

FIG. 9 is yet another block diagram of a data processing device according to an exemplary embodiment. The data processing device is applied to a third network function. Referring to FIG. 9, the device includes a third communication module 40.

The third communication module 40 is configured to send a first request message to a second network function and receive a response message sent by the second network function in response to the first request message.

The first request message is configured to request sensing data.

The response message carries a sensing dataset, and sensing data in the sensing dataset is from a third-party application function (AF) entity.

In some embodiments, the third communication module 40 is further configured to:
determine task deployment information for sensing computing based on computing power information and the sensing dataset, wherein the computing power information includes information of a computing power node providing computing power support to a core network; and
send the task deployment information to the second network function.

In some embodiments, the device further includes a second processing module 50.

The second processing module 50 is configured to:
acquire the computing power information from a storage network function, wherein the storage network function is configured to store the information of the computing power node providing the computing power support to the core network.

In some embodiments, the third communication module 40 is further configured to:
receive a service request message from a UE, wherein the service request message is configured to request sensing computing; and
send the first request message to the second network function in response to the service request message.

In an embodiment, the service request message includes at least one of a UE identifier, a service type, or a service requirement.

Regarding the device in the aforementioned embodiments, the specific manner in which each unit performs operations has been detailed in the embodiments concerning the method, which is not repeated herein.

In practical applications, the specific structures of the aforementioned third communication unit 40 and the second processing module 50 may be implemented by the data processing device.

The data processing device described in the embodiment may be arranged within a core network device.

Those skilled in the art may appreciate that the function of each unit within the data processing device of the embodiment of the present disclosure may be understood by reference to the preceding description of the data processing method applied to the third network function. The function of each unit within the data processing device of the embodiment of the present disclosure may be realized either through analogue circuit implementing the functions described in the embodiment of the present disclosure, or through a base station running software executing the functions described in the embodiment of the present disclosure.

By collecting the sensing data from the third-party AF, distributing the corresponding computing task to at least one computing power node for computing, and receiving the computing result fed back from the computing power node, the data processing device described in the embodiment of the present disclosure can enhance the processing capability of sensing data and meet the high-quality requirements for sensing data and computing power in future communication systems.

FIG. 10 is a block diagram of an arrangement for implementing a data processing device 900 according to an exemplary embodiment. Referring to FIG. 10, the device 900 includes a processing component 922 which further includes one or more processors, and a memory resource represented by a memory 932 for storing instructions such as applications executable by the processing component 922. The application stored in memory 932 may include one or more modules, each corresponding to a set of instructions. Furthermore, the processing component 922 is configured to execute instructions to perform the aforementioned data processing method applied to the core network functions (such as the aforementioned first network function, second network function, or third network function).

The device 900 may further include a power component 926 configured to perform power management for the device 900, a wired or wireless network interface 950 configured to connect the device 900 to a network, and an input/output (I/O) interface 958. The device 900 may operate based on an operating system stored in the memory 932, such as Windows Server^{™}, Mac OS X^{™}, Unix^{™}, Linux^{™}, FreeBSD^{™}, or the like.

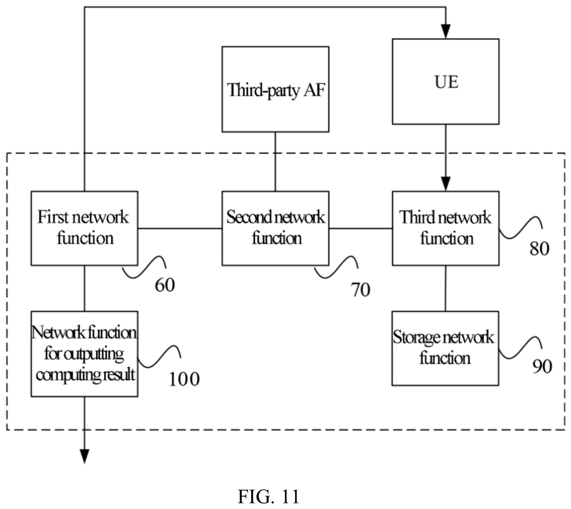

FIG. 11 is a block diagram of a core network device according to an exemplary embodiment. Referring to FIG. 11, the core network device includes a first network function 60, a second network function 70, and a third network function 80.

The third network function 80 is configured to send a first request message to the second network function 70 in response to a service request message from a UE, wherein the service request message is configured to request sensing computing, and the first request message is configured to request sensing data.

The second network function 70 is configured to send a second request message to a corresponding third-party application function (AF) entity in response to the first request message, receive the sensing data fed back by the third-party AF, form a sensing dataset, and feed the sensing dataset back to the third network function 80, wherein the second request message is configured to request the sensing data of each third-party AF.

The third network function 300 is further configured to determine task deployment information based on the received sensing dataset and acquired computing power information, and send the task deployment information to the second network function 70.

The second network function 70 is further configured to send the received sensing dataset and task deployment information to the first network function 60.

The first network function 60 is configured to distribute a computing task corresponding to the sensing dataset to at least one computing power node based on the received task deployment information, and receive a computing result fed back from each computing power node.

In some embodiments, the core network device further includes a storage network function 90 and a network function 100 for outputting the computing result.

The storage network function 90 is configured to store information of the computing power node providing computing power support to the core network.

The third network function 80 is configured to acquire the computing power information from the storage network function.

The first network function 60 is further configured to analyze and aggregate the computing result, and send the computing result to the UE or the network function 100 for outputting the computing result.

By collecting the sensing data from the third-party AF, distributing the corresponding computing task to at least one computing power node for computing, and receiving the computing result fed back from the computing power node, the core network device in the embodiment can enhance the processing capability of sensing data and meet the high-quality requirements for sensing data and computing power in future communication systems.

In an exemplary embodiment, the present disclosure further provides a computer-readable storage medium storing computer program instructions. When executed by a processor, these instructions implement the steps of the data sensing method provided by the present disclosure. For example, the computer-readable storage medium may be a non-transitory computer-readable storage medium containing instructions, for example, may be the memory 932 of the aforementioned device 900 containing instructions. These instructions may be executed by the processing component 922 of the device 900 to perform the aforementioned data processing method. For example, the non-transitory computer-readable storage medium may be ROM, random access memory (RAM), CD-ROM, magnetic tape, floppy disk, optical data storage devices, and the like.

In another exemplary embodiment, a computer program product is further provided. The computer program product includes a computer program executable by a programmable device. The computer program includes code portions for executing the aforementioned data processing method when executed by the programmable device.

The technical solutions described in the embodiments of the present disclosure may be arbitrarily combined in the case where they are not conflict.

Those skilled in the art may easily conceive of other implementations of the present disclosure upon consideration of the specification and practice of the invention disclosed herein. The present disclosure is intended to cover any variations, uses, or adaptations of the present disclosure that follow the general principle of the present disclosure and include the common knowledge or conventional technical means in the technical field not disclosed by the present disclosure. The specification and embodiments are to be regarded as exemplary only, with the true scope and spirit of the present disclosure being indicated by the following claims.

It should be understood that the present disclosure is not limited to the precise structures described above and illustrated in the accompanying drawings, and that various modifications and changes may be made without departing from the scope thereof. The scope of the present disclosure is limited only by the appended claims.

## Claims

1. A data processing method which is applied to a first network function, comprising:
distributing a computing task corresponding to a sensing dataset to at least one computing power node, wherein sensing data in the sensing dataset is from a third-party application function, AF, entity; and
receiving a computing result fed back from the at least one computing power node.

2. The method according to claim 1, further comprising:
sending the computing result to a network function for outputting the computing result; and/or
sending, via a user plane network function, the computing result to a user equipment, UE, wherein the UE is a UE with a sensing computing requirement.

3. The method according to claim 2, further comprising, prior to sending the computing result:
analyzing and aggregating the computing result.

4. The method according to any one of claims 1 to 3, wherein distributing the computing task corresponding to the sensing dataset to the at least one computing power node comprises:
distributing, based on task deployment information for sensing computing, the computing task corresponding to the sensing dataset to the at least one computing power node.

5. The method according to claim 4, further comprising:
receiving the task deployment information sent by a second network function, wherein the task deployment information comprises the sensing data in the sensing dataset and information of a corresponding computing power node.

6. The method according to any one of claims 1 to 5, further comprising:
receiving the sensing dataset sent by a second network function.

7. The method according to any one of claims 1 to 6, wherein the computing power node comprises: at least one of a UE, a core network device, or a third-party computing power node; and/or at least one of the at least one of a UE, a core network device, and a third-party computing power node.

8. A data processing method, which is applied to a second network function, comprising:
sending a sensing dataset to a first network function, wherein sensing data in the sensing dataset is from a third-party application function, AF, entity.

9. The method according to claim 8, further comprising:
receiving a first request message sent by a third network function, wherein the first request message is configured to request the sensing data; and
acquiring the sensing dataset in response to the first request message.

10. The method according to claim 9, wherein acquiring the sensing dataset in response to the first request message comprises:
sending a second request message to at least one corresponding third-party application function, AF, entity in response to the first request message, wherein the second request message is configured to request the sensing data of each third-party AF; and
obtaining the sensing dataset by receiving the sensing data sent by the at least one third-party AF.

11. The method according to claim 10, wherein receiving the sensing data sent by the at least one third-party AF comprises:
receiving the sensing data sent by the at least one third-party AF via a user plane network function.

12. The method according to any one of claims 9 to 11, further comprising:
sending a response message to the third network function in response to the first request message, wherein the response message carries the sensing dataset; and
receiving task deployment information for sensing computing sent by the third network function, wherein the task deployment information is obtained based on the sensing dataset.

13. The method according to claim 12, further comprising:
sending the task deployment information to the first network function, wherein the task deployment information comprises the sensing data in the sensing dataset and information of a corresponding computing power node.

14. A data processing method, which is applied to a third network function, comprising:
sending a first request message to a second network function, wherein the first request message is configured to request sensing data; and
receiving a response message sent by the second network function in response to the first request message, wherein the response message carries a sensing dataset, and sensing data in the sensing dataset is from a third-party application function, AF, entity.

15. The method according to claim 14, further comprising:
determining task deployment information for sensing computing based on computing power information and the sensing dataset, wherein the computing power information comprises information of a computing power node providing computing power support to a core network; and
sending the task deployment information to the second network function.

16. The method according to claim 15, further comprising:
acquiring the computing power information from a storage network function, wherein the storage network function is configured to store the information of the computing power node providing the computing power support to the core network.

17. The method according to any one of claims 14 to 16, further comprising:
receiving a service request message from a UE, wherein the service request message is configured to request sensing computing; and
sending the first request message to the second network function in response to the service request message.

18. The method according to claim 17, wherein the service request message comprises at least one of a UE identifier, a service type, or a service requirement.

19. The method according to any one of claims 15 to 18, wherein the task deployment information comprises the sensing data in the sensing dataset and a corresponding computing power node.

20. A core network device, comprising a first network function, a second network function, and a third network function, wherein:
the third network function is configured to send a first request message to the second network function in response to a service request message from a UE, wherein the service request message is configured to request sensing computing, and the first request message is configured to request sensing data;
the second network function is configured to send a second request message to a corresponding third-party application function, AF, entity in response to the first request message, receive the sensing data fed back by the third-party AF, form a sensing dataset, and feed the sensing dataset back to the third network function, wherein the second request message is configured to request the sensing data of each third-party AF;
the third network function is further configured to determine task deployment information based on the received sensing dataset and acquired computing power information, and send the task deployment information to the second network function;
the second network function is further configured to send the received sensing dataset and task deployment information to the first network function; and
the first network function is configured to distribute a computing task corresponding to the sensing dataset to at least one computing power node based on the received task deployment information, and receive a computing result fed back from each computing power node.

21. The core network device according to claim 20, further comprising a storage network function and a network function for outputting the computing result, wherein:
the storage network function is configured to store information of the computing power node providing computing power support to the core network;
the third network function is configured to acquire the computing power information from the storage network function; and
the first network function is further configured to analyze and aggregate the computing result, and send the computing result to the UE or the network function for outputting the computing result.

22. A data processing device, which is applied to a first network function, comprising a first communication module configured to:
distribute a computing task corresponding to a sensing dataset to at least one computing power node, and receive a computing result fed back from the at least one computing power node,
wherein sensing data in the sensing dataset is from a third-party application function, AF, entity.

23. A data processing device, which is applied to a second network function, comprising a second communication module configured to:
send a sensing dataset to a first network function, wherein sensing data in the sensing dataset is from a third-party application function, AF, entity.

24. A data processing device, which is applied to a third network function, comprising a third communication module configured to:
send a first request message to a second network function, and receive a response message sent by the second network function in response to the first request message,
wherein the first request message is configured to request sensing data; and
the response message carries a sensing dataset, and sensing data in the sensing dataset is from a third-party application function, AF, entity.

25. A core network function, comprising:
a transceiver;
a processor; and
a memory storing computer-executable instructions,
wherein the processor is connected to the transceiver and the memory, and is configured to load and execute the computer-executable instructions to implement the method according to any one of claims 1 to 7, or any one of claims 8 to 13, or any one of claims 14 to 19.

26. A computer-readable storage medium having a computer program stored thereon, wherein the computer-readable storage medium stores executable instructions, and the executable instructions are loaded and executed by a processor to implement the method according to any one of claims 1 to 10, or any one of claims 8 to 13, or any one of claims 14 to 19.
